# EUROPEAN PATENT SPECIFICATION

(11) **EP 3 179 040 B1**
(45) Date of publication and mention of the grant of the patent: **14.07.2021**
(21) Application number: 16199208.6
(22) Date of filing: 16.11.2016
(51) Int. Cl.: F01D 5/18

(54) **COMPONENT FOR A GAS TURBINE ENGINE AND CORRESPONDING A METHOD OF MANUFACTURING A FILM-COOLED ARTICLE**
BAUTEIL FÜR EIN GASTURBINENTRIEBWERK UND ZUGEHÖRIGES VERFAHREN ZUR HERSTELLUNG EINES FILMGEKÜHLTES ARTIKELS
COMPOSANT POUR UN MOTEUR À TURBINE À GAZ ET PROCÉDÉ ASSOCIÉ DE FABRICATION D'UN ARTICLE REFROIDI PAR PELLICULE

(30) Priority: 20.11.2015 US 201562258097 P
(43) Date of publication of application: 14.06.2017
(73) Proprietor: Raytheon Technologies Corporation, Farmington, CT 06032 (US); The Penn State Research Foundation, University Park, PA 16802 (US)
(72) Inventor: LEWIS, Scott D., Vernon, CT 06066 (US); LYNCH, Stephen, State College, PA 16803 (US); HAYDT, Shane, State College, PA 16801 (US)
(74) Representative: Dehns

(56) References cited:
- EP-A2- 0 227 582
- EP-A2- 2 574 726
- US-B1- 8 057 180

## Description

### TECHNICAL FIELD

The present disclosure relates generally to film cooling holes, and specifically film cooling holes for gaspath components of a gas turbine engine. In particular, the present invention relates to a component for a gas turbine and to a method for manufacturing a film cooled article.

### BACKGROUND

Gas turbine engine include a compressor for compressing air, a combustor for mixing the compressed air with a fuel and igniting the mixture, and a turbine across which the resultant combustion products are expanded. As a result of the combustion, temperatures within the turbine engine gaspath connecting each of the sections are extremely high. With some components the extreme temperatures require active cooling systems to keep the components exposed to the gaspath (referred to as gaspath components) below a maximum temperature and prevent damage to the component.

In some exemplary gaspath components, such as rotors and blades, among others, the active cooling takes the form of a film cooling process. In film cooling, a series of holes eject a stream of coolant, such as air, along a surface of the gaspath component being cooled. The stream of coolant simultaneously cools the exterior surface and provides a buffer zone prevent at least a portion of the high temperature gasses in the gaspath from contacting the gaspath component. Film cooling can be utilized in conjunction with other active cooling systems, or on its own to cool a gaspath component depending on the needs of the gaspath component.

EP 2 574 726 A2 discloses a prior art component for a gas turbine engine in accordance with the preamble of claim 1.

EP 0 227 582 A2 discloses prior art improved film cooling passages with step diffuser.

US 8,057,180 B1 discloses a prior art shaped film cooling hole for a turbine airfoil.

### SUMMARY OF THE INVENTION

According to a first aspect of the present invention, there is provided a component for a gas turbine engine as set forth in claim 1.

In an exemplary embodiment of the above described component for a gas turbine engine the centerline of the diffuser section is offset from the axis of the metering section in an upstream direction.

In another exemplary embodiment of any of the above described components for a gas turbine engine the centerline of the diffuser section is offset from the axis of the metering section by at least 12.5% of the diameter of the metering section.

In another exemplary embodiment of any of the above described components for a gas turbine engine the centerline of the diffuser section is offset from the axis of the metering section by at least 25% of the diameter of the metering section.

In another exemplary embodiment of any of the above described components for a gas turbine engine the centerline of the diffuser section is offset from the axis of the metering section by approximately 25% of the diameter of the metering section.

In another exemplary embodiment of any of the above described components for a gas turbine engine the metering section is cylindrical and has a circular cross section normal to the axis.

In another exemplary embodiment of any of the above described components for a gas turbine engine the at least one film cooling hole is a 7-7-7 film cooling hole angled at 7 degrees in a forward direction and lateral directions relative to the axis.

In another exemplary embodiment of any of the above described components for a gas turbine engine wherein the at least one film cooling hole is a 10-10-10 film cooling hole angled at 10 degrees in a forward direction and lateral directions relative to the axis.

In another exemplary embodiment of any of the above described components for a gas turbine engine the upstream direction is a forward offset direction, relative to an expected fluid flow across an exterior surface of the body.

According to a further aspect of the present invention, there is provided a method for manufacturing a film cooled article as set forth in claim 10.

In an example of the above described method for manufacturing a film cooled article the metering section is manufactured in a first manufacturing step, and the diffuser section is manufactured in a second manufacturing step distinct form the first manufacturing step.

In a further example of any of the above described exemplary methods for manufacturing a film cooled article the metering section and the diffuser section are simultaneously manufactured.

A further example of any of the above described exemplary methods for manufacturing a film cooled article further includes offsetting the diffuser section upstream of the metering section.

A further example of any of the above described exemplary methods for manufacturing a film cooled article further includes offsetting the centerline of the diffuser section from the axis of the metering section by at least 12.5% of the diameter of the metering section.

A further example of any of the above described exemplary methods for manufacturing a film cooled article further includes offsetting the centerline of the diffuser section from the axis of the metering section by at least 25% of the diameter of the metering section.

A further example of any of the above described exemplary methods for manufacturing a film cooled article further includes offsetting the centerline of the diffuser section from the axis of the metering section by approximately 25% of the diameter of the metering section.

These and other features of the present invention can be best understood from the following specification and drawings, the following of which is a brief description.

### BRIEF DESCRIPTION OF THE DRAWINGS

Figure 1 schematically illustrates a gas turbine engine including multiple gaspath components.
Figure 2 schematically illustrates an exemplary gaspath component including a series of film cooling holes.
Figure 3 schematically illustrates a negative space of one exemplary film cooling hole.
Figure 4 schematically illustrates multiple specific arrangements of the negative space illustrated in Figure 3.
Figure 5 schematically illustrates a surface view of multiple specific arrangements of a film cooling hole.

### DETAILED DESCRIPTION OF AN EMBODIMENT

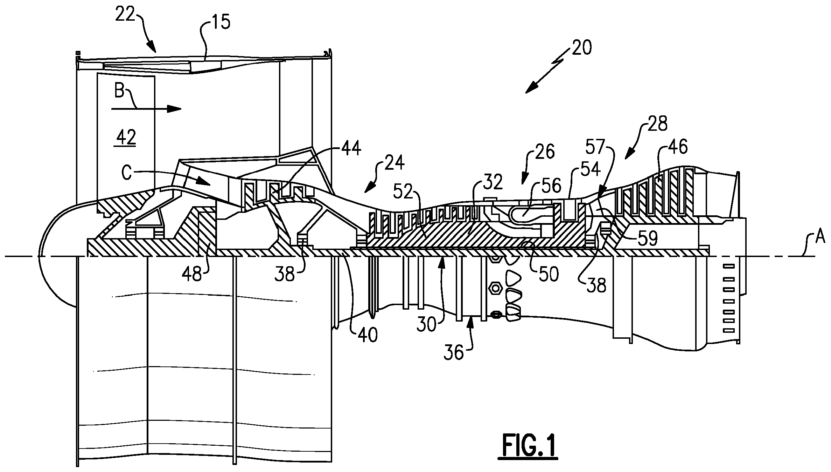

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six, with an example embodiment being greater than about ten, the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten, the fan diameter is significantly larger than that of the low pressure compressor 44, and the low pressure turbine 46 has a pressure ratio that is greater than about five. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 10,668 meters (35,000 feet). The flight condition of 0.8 Mach and 10,668 m (35,000 ft), with the engine at its best fuel consumption - also known as "bucket cruise Thrust Specific Fuel Consumption ('TSFC')" - is the industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R) / (518.7 °R)]^{0.5} (where °R = K x 9/5). The "Low corrected fan tip speed" as disclosed herein according to one non-limiting embodiment is less than about 350.5 m/s (1150 ft / second) .

In order to compensate for the extreme temperatures generated by the combustion, gaspath components, such as the blades and stators at an inlet of the turbine section 28 include active cooling systems. Among other cooling techniques the active cooling systems utilize a film cooling technique.

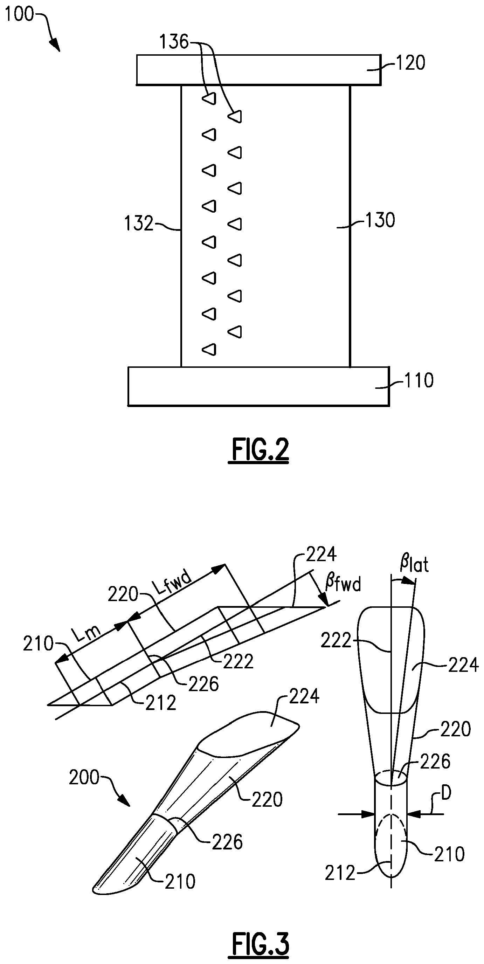

With continued reference to Figure 1, Figure 2 illustrates an exemplary film cooled gaspath component 100. The exemplary film cooled gaspath component 100 is a stator, however one of skill in the art having the benefit of this disclosure will understand that the shaped film cooling holes described herein can be utilized in any type of film cooled component, and are not limited to stators.

The film cooled component 100 includes a radially inward platform section 110, a radially outward platform section 120, and a vane portion 130 extending between the platforms 110, 120. The vane portion 130 includes a leading edge 132 positioned at a fore most edge of the vane portion 130, relative to an expected direction of fluid flow through the engine. Similarly, the vane portion 130 includes a trailing edge 134 positioned at an aft most edge of the vane portion 130, relative to an expected direction of fluid flow through the engine.

Along the leading edge 132 are multiple rows of film cooling holes 136. The film cooling holes 136 are connected to an internal plenum that receives a cooling fluid from either the radially outward platform 120 or the radially inward platform 110. The cooling fluid is pressurized and is forced out of the film cooling hole along the surface of the vane portion 130. The cooling fluid forms a layer of fluid, or a film, that adheres to the vane portion 130 and simultaneous cools the vane portion 130 and provides a buffer against hot gasses within the gaspath contacting the vane portion 130.

With continued reference to Figures 1 and 2, Figure 3 schematically illustrates a negative space of one exemplary film cooling hole 200. The film cooling hole 200 is a shaped film cooling holes. Shaped film cooling generally consist of a metering section 210 through the material of the gaspath component and a diffuser section 220 to spread coolant over the surface of the gaspath component. In order to spread the coolant the diffuser section 220 is angled outward from the metering section 210, and expands the coolant. In one example the diffuser section 220 is angled at a forward angle β_{fwd} and lateral angles βₗₐₜ of respectively 7 degrees in the forward and lateral directions, and is referred to as a 7-7-7 film cooling hole. In an alternate example, the diffuser section 220 is angled at a forward angle β_{fwd} and lateral angles βₗₐₜ of respectively 10 degrees in the forward and lateral directions and is referred to as a 10-10-10 film cooling hole. The intentional offset between the diffuser section 220 and the metering section 210 is applicable to both 7-7-7 holes and 10-10-10 holes, as well as any number of other film cooling hole styles, as will be understood by one of skill in the art.

These metering section 210 and diffuser section 220 are typically created using distinct machining actions. In some examples the holes are created using electrical discharge machining, although any alternative machining process can be used to similar effect. Conventional film cooling holes are designed such that a centerline 222 of the diffuser section, and an axis 212 of the metering section 210 are collinear. The centerline 222 of the diffuser section 220 is defined as a line drawn from a midpoint of the opening intersecting with the metering section 210 to a midpoint of the opening in the exterior of the gaspath component 100 (see Figure 1).

In the illustrated example, the metering section 210 is generally cylindrical with a circular cross section parallel to an axis 212 defined by the cylinder. In alternative examples, the metering section 210 can be formed with alternative cross sectional shapes, such as regular polygons, and function in a similar manner. The metering section 210 provides a through hole to the pressurized internal cavity and allows cooling fluid to be passed from the internal cavity to an exterior surface of the gaspath component 100. In some examples, the pressurized internal cavity is an impingement cavity.

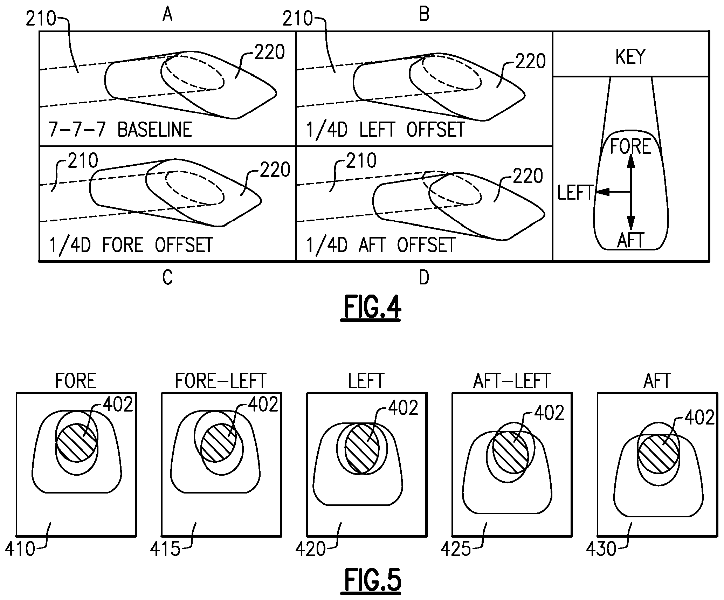

The diffuser section 220 is an angled hole with a wider opening 224 at an outlet end on the surface of the gaspath component and a narrower opening 226, approximately the same size as the metering section 210 cross section interior to the gaspath component. By aligning the axis 212 of the metering section 210 with a centerline 222 of the diffuser section 220, the diffuser section 220 is able to expand and direct the cooling gas emitted from the metering section 210 and thereby enhance the film cooling layer. Since the metering section 210 and the diffuser section 220 are machined into the gas path component via separate machining actions, it is possible to include an intentional offset between the axis 212 of the metering section 210 and the centerline 222 of the diffuser section 220. With continued reference to Figure 3, and with like numerals indicating like elements, Figures 4 and 5 schematically illustrate exemplary intentional offsets. Included in the illustration of Figure 5 is a key illustrating the terms "fore", "aft", and "left" as they are applied to a given film cooling hole 200. Illustration A shows a film cooling hole 200 where the diffuser section 220 and the metering section 210 are not offset. Illustration B shows a diffuser section 220 that is offset left by one quarter of the diameter of the circular cross section of the metering section 210. Illustration C shows a diffuser section 220 that is offset forward by one quarter of the diameter of the circular cross section of the metering section 210. Illustration D shows a diffuser section 220 that is offset aftward by one quarter of the diameter of the metering section 210. According to the invention, the intentional offset will result in the centerline 222 and the axis 212 being parallel, but not collinear. In other examples the subject-matter of which is not according to the invention and is present for illustration purposes only, the offset can include a rotation of the diffuser section, and the centerline 222 and the axis 212 can be skew. While referred to herein by their relationship to the diameter of the circular cross section of the film cooling hole, one of skill in the art will understand that in the alternative examples using differently shaped metering sections, the diameter referred to is a hydraulic diameter.

In a similar vein, Figure 5 illustrates view of five different offsets at the surface of the gaspath component, with view 410 corresponding to illustration C of Figure 4, view 420 corresponding to illustration B of Figure 4, and 430 corresponding to illustration D of Figure 4. It is also recognized that any of the offsets described above can be combined with another offset. By way of example, view 415 is a combination of the offsets of views 410 and 420, alternately referred to as a fore-left offset. In another example, view 425 is a combination of views 420 and 430, alternately referred to as an aft-left offset. When including an intentional offset, the diffuser section 220 is not aligned with the cross section of the metering section 210. As a result, the flow of coolant through the metering section 210 into the diffuser section 220, and thus creating the film on the gaspath component, is restricted to the shaded region 402.

Further, while illustrated in the exemplary embodiments as 90 degrees increments for the offsets, one of skill in the art will understand that an offset can be made according to any known increment and achieve a desired purpose, with the magnitude of the offset and, in an example that is not according to the invention and is present for illustration purposes only the angle of the offset, being determined by the specific needs of the given application.

Offsetting the diffuser section 220 from the metering section 210 affects the disbursement of the cooling fluid along the surface of the component including the film cooling hole 200, and has a corresponding effect on the efficacy of the film cooling.

In some examples, such as the illustrated aft shifts of Figures 4 and 5, ideal cooling is achieved by shifting the diffuser section 220 upstream relative to an expected fluid flow through the gaspath of the turbine engine in which the gaspath component is located. Shifting the diffuser section 220 upstream increases the cooling capabilities of the film cooling system. In yet further examples, the diffuser section 220 is shifted upstream by one quarter (25%) of the diameter of the metering section 210. In other examples, ideal cooling is achieved by shifting the diffuser section 220 upstream by one eighth (12.5%) of the diameter of the metering section 210. In other examples, the diffuser section 220 is shifted by an amount within the range of one eight to one quarter of the diameter of the metering section 210. In further alternative examples the diffuser section 220 can be shifted upstream by any suitable amount, and the shifting is not limited to the range of one eight to one quarter of the diameter of the metering section 210.

Another factor that impacts the effectiveness of the cooling provided by any given film cooling hole is the blowing ratio of the cooling hole. The blowing ratio is a number determined by *ρ*_{c}*U*_{c}/*ρ*_{∞}*U*_{∞}, where *ρ*_{c} is the density of the cooling fluid, *U*_{c} is the velocity of the cooling fluid passing through the coolant hole, *ρ*_{∞} is the density of the fluid in the gaspath, and *U*_{∞} is the velocity of the fluid in the gaspath. In some examples, the film cooling provided is most effective when the blowing ratio is 1.0, with the cooling effectiveness decreasing the farther the film gets from the originating film cooling hole.

It is further understood that any of the above described concepts can be used alone or in combination with any or all of the other above described concepts. Although an embodiment of this invention has been disclosed, a worker of ordinary skill in this art would recognize that certain modifications would come within the scope of this invention. For that reason, the following claims should be studied to determine the true scope and content of this invention.

## Claims

1. A component (100) for a gas turbine engine (20) comprising:
a body (130) having at least one internal cooling cavity; and
a plurality of film cooling holes (136, 200) disposed along a first edge (132) of said body (130), at least one of the film cooling holes (136, 200) including a metering section (210) defining an axis (212), and a diffuser section (220) having a centerline (222), the centerline (222) of the diffuser section (220) being offset from the axis (212) of the metering section (210),
**characterised in that**:
the centerline (222) of the diffuser section (220) and the axis (212) of the metering section (210) are in parallel.

2. The component (100) of claim 1, wherein the centerline (222) of the diffuser section (220) is offset from the axis (212) of the metering section (210) in an upstream direction.

3. The component of claim 2, wherein the centerline (222) of the diffuser section (220) is offset from the axis (212) of the metering section (210) by at least 12.5% of a diameter of the metering section (210).

4. The component of claim 2, wherein the centerline (222) of the diffuser section (220) is offset from the axis (212) of the metering section (210) by at least 25% of a diameter of the metering section (210).

5. The component of claim 2, wherein the centerline (222) of the diffuser section (220) is offset from the axis (212) of the metering section (210) by approximately 25% of a diameter of the metering section (210).

6. The component (100) of any preceding claim, wherein the metering section (210) is cylindrical and has a circular cross section normal to the axis (212).

7. The component (100) of any preceding claim, wherein the at least one film cooling hole (136, 200) is a 7-7-7 film cooling hole angled at a forward angle (β_{fwd}) and lateral angles (βₗₐₜ) of respectively 7 degrees in a forward direction and lateral directions relative to the axis (212).

8. The component (100) of any of claims 1 to 6, wherein the at least one film cooling hole (136, 200) is a 10-10-10 film cooling hole (136, 200) angled at a forward angle (β_{fwd}) and lateral angles (βₗₐₜ) of respectively 10 degrees in a forward direction and lateral directions relative to the axis (212).

9. The component (100) of any of claims 2 to 8, wherein the upstream direction is a forward offset direction, relative to an expected fluid flow across an exterior surface of the body (130).

10. A method for manufacturing a film cooled article (100) comprising offsetting a diffuser section (220) of at least one film cooling hole (136, 200) relative to a metering section (210) of the at least one film cooling hole (136, 200), wherein offsetting the diffuser section (220) comprising manufacturing the diffuser section (220) such that a centerline (222) of the diffuser section (220) is not collinear with an axis (212) defined by the metering section (210); **characterised in that**: the method further comprises maintaining the centerline (222) of the diffuser section (220) in parallel with the axis (212) defined by the metering section (210).

11. The method of claim 10, wherein said metering section (210) is manufactured in a first manufacturing step, and said diffuser section (220) is manufactured in a second manufacturing step distinct form said first manufacturing step.

12. The method of claim 10, wherein said metering section (210) and said diffuser section (220) are simultaneously manufactured.

13. The method of claim 10, 11 or 12, further comprising offsetting the diffuser section (220) upstream of the metering section (210).

14. The method of claim 13, further comprising offsetting the centerline (222) of the diffuser section (220) from the axis (212) of the metering section (210) by at least 12.5% of diameter of the metering section (210).

15. The method of claim 13, further comprising offsetting the centerline (222) of the diffuser section (220) from the axis (212) of the metering section (210) by at least 25% of a diameter of the metering section (210), or approximately 25% of the diameter of the metering section (210).

## Patentansprüche

1. Bauteil (100) für ein Gasturbinentriebwerk (20), umfassend:
einen Körper (130), der zumindest einen inneren Kühlhohlraum aufweist; und
eine Vielzahl von Filmkühllöchern (136, 200), die entlang einer ersten Kante (132) des Körpers (130) angeordnet ist, wobei zumindest eines der Filmkühllöcher (136, 200) einen Messabschnitt (210), der eine Achse (212) definiert, und einen Diffusorabschnitt (220) beinhaltet, der eine Mittellinie (222) aufweist, wobei die Mittellinie (222) des Diffusorabschnittes (220) zu der Achse (212) des Messabschnittes (210) versetzt ist,
**dadurch gekennzeichnet, dass**:
die Mittellinie (222) des Diffusorabschnittes (220) und die Achse (212) des Messabschnittes (210) parallel sind.

2. Bauteil (100) nach Anspruch 1, wobei die Mittellinie (222) des Diffusorabschnittes (220) zu der Achse (212) des Messabschnittes (210) in einer stromaufwärtigen Richtung versetzt ist.

3. Bauteil nach Anspruch 2, wobei die Mittellinie (222) des Diffusorabschnittes (220) zu der Achse (212) des Messabschnittes (210) um zumindest 12,5 % eines Durchmessers des Messabschnittes (210) versetzt ist.

4. Bauteil nach Anspruch 2, wobei die Mittellinie (222) des Diffusorabschnittes (220) zu der Achse (212) des Messabschnittes (210) um zumindest 25 % eines Durchmessers des Messabschnittes (210) versetzt ist.

5. Bauteil nach Anspruch 2, wobei die Mittellinie (222) des Diffusorabschnittes (220) zu der Achse (212) des Messabschnittes (210) um ungefähr 25 % eines Durchmessers des Messabschnittes (210) versetzt ist.

6. Bauteil (100) nach einem vorhergehenden Anspruch, wobei der Messabschnitt (210) zylindrisch ist und einen kreisförmigen Querschnitt senkrecht zu der Achse (212) aufweist.

7. Bauteil (100) nach einem vorhergehenden Anspruch, wobei das zumindest eine Filmkühlloch (136, 200) ein 7-7-7-Filmkühlloch ist, das in einem Vorwärtswinkel (β_{fwd}) und Seitenwinkeln (βₗₐₜ) von jeweils 7 Grad in einer Vorwärtsrichtung und Seitenrichtungen relativ zu der Achse (212) gewinkelt ist.

8. Bauteil (100) nach einem der Ansprüche 1 bis 6, wobei das zumindest eine Filmkühlloch (136, 200) ein 10-10-10-Filmkühlloch (136, 200) ist, das in einem Vorwärtswinkel (β_{fwd}) und Seitenwinkeln (βₗₐₜ) von jeweils 10 Grad in einer Vorwärtsrichtung und Seitenrichtungen relativ zu der Achse (212) gewinkelt ist.

9. Bauteil (100) nach einem der Ansprüche 2 bis 8, wobei die aufwärtige Richtung eine Vorwärtsversatzrichtung relativ zu einem erwarteten Fluidfluss über eine Außenfläche des Körpers (130) ist.

10. Verfahren zum Herstellen eines filmgekühlten Artikels (100), umfassend das Versetzen eines Diffusorabschnittes (220) von zumindest einem Filmkühlloch (136, 200) relativ zu einem Messabschnitt (210) des zumindest eines Filmkühllochs (136, 200), wobei das Versetzen des Diffusorabschnittes (220) das Herstellen des Diffusorabschnittes (220) umfasst, sodass eine Mittellinie (222) des Diffusorabschnittes (220) nicht kollinear mit einer Achse (212) ist, die durch den Messabschnitt (210) definiert ist;
**dadurch gekennzeichnet, dass**:
das Verfahren ferner das Halten der Mittellinie (222) des Diffusorabschnittes (220) parallel zu der Achse (212) umfasst, die durch den Messabschnitt (210) definiert ist.

11. Verfahren nach Anspruch 10, wobei der Messabschnitt (210) in einem ersten Herstellungsschritt hergestellt wird, und der Diffusorabschnitt (220) in einem zweiten Herstellungsschritt hergestellt wird, der sich von dem ersten Herstellungsschritt unterscheidet.

12. Verfahren nach Anspruch 10, wobei der Messabschnitt (210) und der Diffusorabschnitt (220) gleichzeitig hergestellt werden.

13. Verfahren nach Anspruch 10, 11 oder 12, ferner umfassend das Versetzen des Diffusorabschnittes (220) stromaufwärts von dem Messabschnitt (210).

14. Verfahren nach Anspruch 13, ferner umfassend das Versetzen der Mittellinie (222) des Diffusorabschnittes (220) zu der Achse (212) des Messabschnittes (210) um zumindest 12,5 % eines Durchmessers des Messabschnittes (210).

15. Verfahren nach Anspruch 13, ferner umfassend das Versetzen der Mittellinie (222) des Diffusorabschnittes (220) zu der Achse (212) des Messabschnittes (210) um zumindest 25 % eines Durchmessers des Messabschnittes (210), oder ungefähr 25 % des Durchmessers des Messabschnittes (210).

## Revendications

1. Composant (100) pour un moteur à turbine à gaz (20) comprenant :
un corps (130) ayant au moins une cavité de refroidissement interne ; et
une pluralité de trous de refroidissement par pellicule (136, 200) disposés le long d'un premier bord (132) dudit corps (130), au moins un des trous de refroidissement par pellicule (136, 200) comportant une section de dosage (210) définissant un axe (212), et une section de diffuseur (220) ayant une ligne médiane (222), la ligne médiane (222) de la section de diffuseur (220) étant décalée par rapport à l'axe (212) de la section de mesure (210),
**caractérisé en ce que** :
la ligne médiane (222) de la section de diffuseur (220) et l'axe (212) de la section de dosage (210) sont parallèles.

2. Composant (100) selon la revendication 1, dans lequel la ligne médiane (222) de la section de diffuseur (220) est décalée par rapport à l'axe (212) de la section de dosage (210) dans une direction verticale.

3. Composant selon la revendication 2, dans lequel la ligne médiane (222) de la section de diffuseur (220) est décalée par rapport à l'axe (212) de la section de dosage (210) d'au moins 12,5 % d'un diamètre de la section de dosage (210).

4. Composant selon la revendication 2, dans lequel la ligne médiane (222) de la section de diffuseur (220) est décalée par rapport à l'axe (212) de la section de dosage (210) d'au moins 25 % d'un diamètre de la section de dosage (210).

5. Composant selon la revendication 2, dans lequel la ligne médiane (222) de la section de diffuseur (220) est décalée par rapport à l'axe (212) de la section de dosage (210) d'environ 25 % d'un diamètre de la section de dosage (210).

6. Composant (100) selon une quelconque revendication précédente, dans lequel la section de dosage (210) est cylindrique et a une section transversale circulaire perpendiculaire à l'axe (212).

7. Composant (100) selon une quelconque revendication précédente, dans lequel l'au moins un trou de refroidissement par pellicule (136, 200) est un trou de refroidissement par pellicule 7-7-7 formant un angle avant (β_{fwd}) et des angles latéraux (βₗₐₜ) respectivement de 7 degrés dans une direction avant et dans les directions latérales par rapport à l'axe (212) .

8. Composant (100) selon l'une quelconque des revendications 1 à 6, dans lequel l'au moins un trou de refroidissement par pellicule (136, 200) est un trou de refroidissement par pellicule 10-10-10 (136, 200) formant un angle avant (β_{fwd}) et des angles latéraux (βₗₐₜ) respectivement de 10 degrés dans une direction avant et dans les directions latérales par rapport à l'axe (212).

9. Composant (100) selon l'une quelconque des revendications 2 à 8, dans lequel la direction amont est une direction décalée vers l'avant, par rapport à un écoulement de fluide attendu à travers une surface extérieure du corps (130).

10. Procédé de fabrication d'un article refroidi par pellicule (100) comprenant le décalage d'une section de diffuseur (220) d'au moins un trou de refroidissement par pellicule (136, 200) par rapport à une section de dosage (210) de l'au moins un trou de refroidissement par pellicule (136, 200), dans lequel le décalage de la section de diffuseur (220) comprenant la fabrication de la section de diffuseur (220) de sorte qu'une ligne médiane (222) de la section de diffuseur (220) n'est pas sur la même ligne qu'un axe (212) défini par la section de dosage (210) ;
**caractérisée en ce que** :
le procédé comprend en outre le maintien de la ligne médiane (222) de la section de diffuseur (220) en parallèle avec l'axe (212) défini par la section de dosage (210).

11. Procédé selon la revendication 10, dans lequel ladite section de dosage (210) est fabriquée lors d'une première étape de fabrication, et ladite section de diffuseur (220) est fabriquée lors d'une seconde étape de fabrication distincte de ladite première étape de fabrication.

12. Procédé selon la revendication 10, dans lequel ladite section de dosage (210) et ladite section de diffuseur (220) sont fabriquées en même temps.

13. Procédé selon la revendication 10, 11 ou 12, comprenant en outre le décalage de la section de diffuseur (220) en amont de la section de dosage (210).

14. Procédé selon la revendication 13, comprenant en outre le décalage de la ligne médiane (222) de la section de diffuseur (220) par rapport à l'axe (212) de la section de dosage (210) d'au moins 12,5 % d'un diamètre de la section de dosage (210).

15. Procédé selon la revendication 13, comprenant en outre le décalage de la ligne médiane (222) de la section de diffuseur (220) par rapport à l'axe (212) de la section de dosage (210) d'au moins 25 % d'un diamètre de la section de dosage (210), ou d'environ 25 % du diamètre de la section de dosage (210).
